**Europäisches Patentamt**

**European Patent Office**

**Office européen des brevets**

(19)

(11) Numéro de publication: **0 168 308**

**B1**

(12)

# FASCICULE DE BREVET EUROPEEN

(45) Date de publication du fascicule du brevet: **18.01.89**

(51) Int. Cl.⁴: **C 01 G 49/14**

(21) Numéro de dépôt: **85401225.9**

(22) Date de dépôt: **19.06.85**

(54) **Procédé de traitement de sulfate ferreux heptahydraté, pour supprimer sa tendance à s'agglomérer et le rendre apte à s'écouler librement.**

(30) Priorité: **20.06.84 FR 8409689**

(43) Date de publication de la demande:
**15.01.86 Bulletin 86/03**

(45) Mention de la délivrance du brevet:
**18.01.89 Bulletin 89/03**

(84) Etats contractants désignés:
**AT BE CH DE GB IT LI LU NL**

(56) Documents cités:
**US-A-2 771 342**

**CHEMICAL ABSTRACTS, vol. 83, no. 6, 11 aou7t 1975, page 116, no. 45382f, Columbus, Ohio, US**

(73) Titulaire: **SOCIETE SARVAL**
**Rue Wilson**
**F-57300 Hagondance (FR)**

(72) Inventeur: **Bold, Jörg**
**Dürerstrasse 12**
**D-6750 Kaiserlautern (DE)**

(74) Mandataire: **CABINET BONNET-THIRION**
**95 Boulevard Beaumarchais**
**F-75003 Paris (FR)**

## Description

L'invention se rapporte à un procédé de traitement de sulfate ferreux cristallisé sous forme heptahydratée, avec des traces intercristallines d'eau contenant de l'acide libre, où, pour supprimer la tendance des cristaux à s'agglomérer et les rendre aptes à s'écouler librement on élimine les traces d'eau et l'on neutralise l'acide libre.

Les solutions de sulfate ferreux sont obtenues en résultat de la lixiviation sulfurique de minerais contenant du fer, et fréquemment en sous-produits de processus industriels, tels que le décapage sulfurique de pièces en métal ferreux, ou la préparation de bioxyde de titane pigment à partir d'ilménite. Par ailleurs le sulfate ferreux heptahydraté (sulfate neige), forme cristallisée stable, est utilisé dans de nombreuses applications; on peut citer les applications:

- comme agent floculant dans le traitement des eaux usées;
- comme oligo-élément dans les aliments pour le bétail;
- comme matière première dans la fabrication de pigments d'oxyde de fer;
- comme additif des engrais;
- comme catalyseur de prise de l'anhydrite.

Le sulfate ferreux heptahydraté précipite sous forme cristalline par concentration des liqueurs de sulfate ferreux. Toutefois ces liqueurs contiennent nécessairement de l'acide sulfurique libre, le fer précipitant à l'état d'hydroxyde à des pH supérieurs à 5-6. En résultat les cristaux de sulfate ferreux heptahydraté que l'on sépare de la liqueur mère restent mouillés de traces d'eau qui contient de l'acide sulfurique libre. L'élimination de ces traces d'eau acide par évaporation suppose, en raison de l'hygroscopicité de l'acide sulfurique, un séchage à une température où le sulfate heptahydraté commence à fondre.

La présence d'eau acide sur le surface des cristeux a tendance à provoquer une agglomération des cristaux en mottes. Les manutentions classiques des produits pulvérulents sont rendues difficiles, les cristaux ne s'écoulant pas librement, avec un angle de talus faible.

On a proposé divers procédés pour remédier à ces difficultés.

Suivant le document de brevet US-A-2.771.342, on peut sécher le sulfate ferreux heptahydraté jusqu'à une teneur en FeSO₄ de 56-60% (la teneur théorique du sulfate heptahydraté étant 64, 66%), puis mélange les cristaux séchés avec du carbonate de calcium finement divisé. Pour être efficace ce procédé demande à être conduit avec beaucoup de soin pour éviter de surchauffer et de fondre le sulfate ou de le déshydrater. Il y a généralement une agglomération partielle qui impose un broyage avant de mélanger intimement le carbonate de calcium.

Suivant le document de brevet FR-A-2.261.229 on sèche le sulfate ferreux en lit fluidisé à une température comprise entre 5 et 65°C, le gaz de fluidisation contenant de l'ammoniac gazeux pour neutraliser l'acide.

La présence de sulfate d'ammonium dans le sulfate ferreux traité est un inconvénient dans certaines applications du produit. Le séchage est relativement long s'il eest effectué à basse température et doit conduire à l'oxydation en sulfatee ferrique d'une partie du sulfate ferreux si le gaz de fluidisation n'est pas neutre et si sa température est relativement élevée pour accélérer le chauffage. La fluidisation d'un produit qui a tendance à s'agglomérer peut être difficile.

Suivant le document de brevet FR-A-2.507.173 le sulfate ferreux est traité par addition de 2,5 à 3% de silice, le mélange étant effectué en 3 à 5 minutes dans une mélangeuse horizontale. La description est imprécise sur le type de silice utilisée, dont l'affinité pour l'humidité détermine l'adsorption de l'eau intercristalline et l'enrobage des grains de sulfate ferreux. Les limitations des conditions du mélange laissent comprendre que ces conditions sont critiques, ce qui serait peu favorable à une mise en oeuvre industrielle.

Les Chemical Abstracts, Vol. 83, No 6, page 116, No 45382f, se référant à JP-A-75 03998, rapportent que l'agglomération du sulfate ferreux heptahydraté est empêchée par ajout d'au moins 5% de $FeSO_4.nH_2O$ avec $1 \leqslant n < 7$; typiqueement de 10% de $FeSO_4.l,3H_2O$. Laissé à l'air libre une semaine, le sulfate traité peut être transporté pneumatiquement.

L'invention a pour objectif un procédé de traitement de sulfate ferreux heptahydraté, pour supprimer sa tendance à s'agglomérer et le rendre apte à s'écouler librement, qui soit simple à mettre en oeuvre et reproductible, et en outre suffisamment souple pour ne pas introduire d'impuretés indésirables pour l'application projetée.

A cet effet l'invention propose un procédé de traitement de sulfate ferreux cristallisé en forme heptahydratée, avec des traces intercristallines d'eau contenant de l'acide libre, où, pour supprimer la tendance des cristaux à s'agglomérer et les rendre aptes à s'écouler librement, on élimine les traces d'eau en ajoutant à ce sulfate ferreux, en mélange intime, un sulfate ferreux en défaut d'hydratation d'au plus 40,5% en poids, en quantité au moins suffisante pour compenser l'eau en traces intercristallines, caractérisé en ce que le défaut d'hydratation du sulfate ferreux ajouté étant d'au moins 10% en poids, on neutralise l'acide libre par ajout de 0,5% à 2% en poids d'un agent de neutralisation pulvérulent.

La fixation des traces d'eau intercristallines est obtenue par absorption du sulfate déshydraté de façon réversible, tandis que la neutralisation est obtenue par l'action de l'agent neutralisant.

Ce dernier est un oxyde basique ou un carbonate, de préférence des oxydes et hydroxydes alcalino terreux, des carbonates et bicarbonates alcalins, alcalino terreux et le carbonate ferreux. Dans ces catégories le magnésium est assimilé aux alcalino terreux.

On notera que le plus couramment on utilisera du carbonate de calcium finement pulvérisé, dont le stockage et la mise en oeuvre sont particulièrement aisés, et que le carbonate ferreux permet une neutralisation qui forme du sulfate ferreux.

Le processus de déshydratation le plus efficace est une calcination du sulfate ferreux heptahydraté à une température au plus égale à 250°C.

On peut opérer en faisant tomber des cristaux de sulfate ferreux heptahydraté sur une plaque chauffée à 250°C environ, on récupère le produit calciné et on le broie. On peut opérer également en chauffant progressivement une couche de cristaux de sulfate heptahydraté, d'épaisseur au plus égale à 1 cm, jusqu'à ce due, après fusion des cristaux, il se forme une masse durcie; cette masse durcie est broyée après refroidissement.

On ajoutera des quantités de sulfate ferreux calciné ainsi comprises entre 6 et 12% en poids du sulfate heptahydraté à traiter.

Les caractéristiques et avantages de l'invention ressortiront d'ailleurs de la description qui va suivre assortie d'exemples.

Les formes cristallisées définies de sulfate ferreux sont le monohydrate ($FeSO_4,H_2O$) qui se décompose à 300°C, le tétrahydrate ($FeSO_4,4H_2O$) qui perd trois molécules d'eau à partir de 100°C, et l'heptahydrate ($FeSO_4,7H_2O$) qui fond à 64°C.

L'heptahydrate s'obtient par concentration de sulfate ferreux à des températures inférieures à 56,7°C. Entre 56,7° et 64°C la cristallisation se produit dans la forme tétrahydratée, et au-dessus de 64°C dans la forme monohydratée.

En fait, au voisinage desdeux températures de transition, 56,7° et 64°C, on a tendance à obtenir concurremment les deux formes cristallines dont les plages de stabilité sont adjacentes. Pour obtenir des formes cristallines suffisamment pures on opère assez loin des températures de transition.

On notera qu'aux températures ambiantes (inférieures à 55°C) on a un équilibre entre l'heptahydrate, le tétrahydrate et l'humidité atmosphérique.

La littérature a mentionné des formes penta et hexahydratées. Mais ces formes se révèlent des mélanges de fins cristaux des formes cristallines définies.

On comprendra que le passage direct d'une forme cristalline à une autre, avec perte ou absorption d'eau, n'est pas instantané pour l'ensemble d'un cristal. Le passage direct implique donc la formation de fins cristaux de la forme nouvelle, avec érosion de la forme originelle. Or la vitesse d'absorption, ou d'élimination, de l'eau de cristallisation est d'autant plus rapide que la surface spécifique de la forme cristalline originelle est grande, donc que la cristallisation est fine. Il en résulte que la déshydratation de formes cristallines à l'état de solide donnera naissance à des espèces plus avides d'humidité que les formes cristallines d'état d'hydratation correspondant, obtenues par cristallisation de solutions. Ainsi le sulfate ferreux monohydraté obtenu par cristallisation de solutions à l'ébullition n'absorbe pas d'humidité.

Et l'on a constaté que les modalités de déshydratation de sulfate ferreux, et notamment la vitesse de perte d'eau, influençaient l'affinité du sulfate déshydraté pour l'eau.

Processus A

On part de sulfate ferreux heptahydraté, contenant de 1 é 2% d'eau intercristalline (eau dite libre). On le calcine dans un courant d'air à 130°C jusqu'à une perte de poids de 40,5%. Dans cet état la vitesse d'élimination de l'eau diminue fortement. Le sulfate déshydraté a alors sensiblement la composition du monohydrate. Il se présente comme une masse d'un brun gris, friable.

Processus B

Sur une plaque chauffante portée à 250°C on fait tomber des cristaux de sulfate heptahydraté à 1-2% d'humidité, les cristaux étant séparés et tombant sur toute la surface de la plaque chauffante. Chaque grain cristallin entre instantanément en fusion au contact de la plaque chauffante, émet une bouffée de vapeur et durcit, la déshydratation étant terminée en 3 à 5 secondes. On détache la masse calcinée de la plaque chauffante, qui présente une couleur grise à verdâtre, friable. Le contrôle pondéral fait apparaître des pertes d'eau de 30 à 40,5% fonction de la durée du maintien du sulfate sur la plaque chauffante, et de l'épaisseur de la couche durcie sur la plaque en fin d'opération.

Processus C

Dans un récipient plat en fer, on dépose une couche, d'épaisseur inférieure à 1 cm, de cristaux de sulfate ferreux heptahydraté, tels que dans les processus A et B, et l'on chauffe progressivement, en remuant.

On constate une fusion du sulfate heptahydraté, puis, l'eau s'évaporant, la masse durcit assez vite. On arrête le chauffage lorsque la masse durcie blanchit. On laisse la masse refroidir, puis on la détache du récipient et on la broie.

Le produit déshydraté a perdu, suivant les conditions de chauffage, de 10 à 40,5% d'eau, et présente une teinte entre le vert et le blanc, en fonction de la quantité d'eau perdue. Il contient des cristaux d'heptahydrate, tétrahydrate et monohydrate, en proportions mal définies.

Processus D

On dissout à saturation du sulfate ferreux heptahydraté dans de l'eau à 59°C. On porte à l'ébullition. Il se forme une masse sédimentaire, blanchâtre. On sépare cette masse par filtration, et on la sèche. On obtient ainsi le monohydrate pur.

Dans tous les exemples suivants, le sulfate ferreux heptahydraté à traiter, qui sera dit sulfate à traiter, est un sulfate "neige" classique, qui contient 1% d'humidité intercristalline. La présence d'acide libre dans l'eau intercristalline est décelable, et ses effets notables. Toutefois la détermination de la quantité d'acide reste imprécise, cet acide ne pouvant être séparé du sulfate heptahydraté quantitativement, et n'étant pas dosable en présence d'une quantité massive de sulfate ferreux. Aussi a-t-on ajouté a chacun des mélanges une quantité d'agent neutralisant en excès sur la quantité, déterminée expérimentalement qui est suffisante pour éliminer les manifestations d'acidité.

L'appréciation de l'efficacité du traitement sera exprimée qualitativement par référence au comportement d'écoulement de la masse des cristaux, ou "fluidité", le comportement idéal étant celui d'un produit pulvérulent sec, qui présente une pente naturelle de talus régulière et faible. On se référera également à la tendance plus ou moins accentuée de la masse de cristaux à former des agglomérats, ou "mottage", le but étant un produit non mottant. On notera que "fluidité" et tendance au mottage sont très liées, le mottage formant obstacle à la fluidité. Toutefois la "fluidité" sera évoquée essentiellement pour apprécier l'efficacité immédiate du traitement, tandis que le "mottage" se rapportera surtout aux résultats à terme du traitement.

## EXEMPLE 1

A 8,9 kg de sulfate à traiter on ajoute 1,0 kg de sulfate ferreux préparé par le processus A, et 0,10 kg de carbonate de calcium en poudre fine (surface spécifique 6 000 $cm^2/g$). On effectue le mélange dans un mélangeur horizontal.

Le mélange obtenu présente, au sortir du mélangeur, une "fluidité" un peu améliorée par rapport au sulfate à traiter de départ. La teinte vire rapidement au brun. En stockage le produit "motte".

## EXEMPLE 2

A 6,9 kg de sulfate à traiter on ajoute 3,0 kg de sulfate déshydraté par le processus A et 0,1 kg de carbonate de calcium comme à l'exemple 1. On effectue le mélange comme à l'exemple 1.

Le produit résultant présente, au sortir du mélangeur, une "fluidité" satisfaisante. La teinte vire lentement au brun. Au stockage on constate une tendance à "motter" toutefois réduite par rapport à l'exemple 1.

## EXEMPLE 3

On opère comme à l'exemple 2, en utilisant comme sulfate déshydraté un sulfate obtenu par le processus D. On ne constate pratiquement aucune amélioration de la fluidité, ni réduction de la tendance au mottage. Le sulfate ferreux traité présente une teinte à peine différente de celle qu'il présentait avant traitement.

## EXEMPLE 4

On effectue le mélange de 9,2 kg de sulfate à traiter, 0,7 kg de sulfate déshydraté par le processus B, et 0,1 kg de carbonate de calcium en poudre fine. La couleur du produit évolue peu au cours du traitement. Le produit est d'une fluidité satisfaisante au sortir du traitement, et garde cette fluidité au cours du stockage, aucune tendance au mottage n'apparaissant.

## EXEMPLE 5

On effectue le mélange de 8,9 kg de sulfate à traiter, 1,0 kg de sulfate déshydraté suivant le processus C, et 0,1 kg de carbonate de calcium en poudre fine. On constate un très faible changement de couleur du sulfate au cours du traitement: la fluidité est satisfaisante et se conserve au cours du stockage.

## EXEMPLE 6

On effectue un mélange de 8,7 kg de sulfate à traiter, 1,0 kg de sulfate déshydraté suivant le processus B, et 0,3 kg de carbonate ferreux. A la fin du mélange la fluidité est insuffisante. Après six heures de repos, on reprend le mélangeage. La fluidité est alors satisfaisante. La variation de teinte est faible. La fluidité reste satisfaisante après un stockage ultérieur, sans tendance au mottage.

## EXEMPLE 7

On effectue un mélange de 8,9 kg de sulfate à traiter, 1,0 kg de sulfate déshydraté suivant le processus B, et 0,1 kg de carbonate de magnésium. Comme à l'exemple 6, la fluidité devient satisfaisante après un repos de six heures et une reprise du mélangeage. La couleur vire au brun. La fluidité reste satisfaisante en stockage ultérieur.

## EXEMPLE 8

On mélange 8,8 kg de sulfate à traiter, 1,0 kg de sulfate déshydraté suivant le processus B, et 0,2 kg de carbonate de potassium. La fluidisation est obtenue après un repos d'une heure, la teinte ayant évolué vers le vert olive puis un brun clair. La fluidité en stockage reste satisfaisante.

## EXEMPLE 9

On broie finement ensemble 95 g de sulfate déshydraté suivant le processus C et 5 g de cyanure de potassium, et l'on mélange les 100 g de broyat avec 9,9 kg de sulfate à traiter. On observe un changement de couleur, celle-ci virant au bleu clair; la fluidité du mélange n'apparaît pas modifiée.

On ajoute à ce mélange 1,0 kg de sulfate déshydraté suivant le processus C et 0,110 kg de sulfate de calcium en poudre fine, et l'on mélange soigneusement. On obtient une excellente fluidité du sulfate traité, qui présente une teinte bleu pâle, et cette fluidité se maintient intacte en stockage.

## EXEMPLE 10

On effectue un premier mélange comprenant 0,880 kg de sulfate déshydraté suivant le processus B, et 120 g de carbonate de calcium en poudre fine.

On mélange 9,2 kg de sulfate à traiter avec 0,8 kg du premier mélange. Après 5 minutes de mélange la fluidité est suffisante, la teinte ayant peu varié. La fluidité reste convenable en stockage.

## EXEMPLE 11

On effectue un premier mélange de 9,3 kg de sulfate à traiter et 0,7 kg de sulfate déshydraté suivant le processus B. On ne constate aucune amélioration de la fluidité, le mélange restant mottant, et aucune variation de teinte.

On ajoute alors au mélange 0,11 kg de carbonate de calcium en poudre fine. Immédiatement la fluidité devient satisfaisante, la teinte variant peu. La fluidité reste convenable en stockage.

Si l'on revient sur les enseignements fournis par les exemples précédents on remarque à partir des exemples 1 à 3 que les sulfates monohydratés obtenus par les processus A et D sont respectivement très peu et pas efficaces, ce qui confirme que les formes cristallines achevées n'ont pratiquement pas d'affinité pour l'humidité. On notera que le processus de déshydratation A est lent, et est tel que des cristaux de monohydrate peuvent se former à partir de la fusion de l'heptahydrate, qui correspond à une solution concentrée de sulfate ferreux dans l'eau de cristallisation de l'heptahydrate. En outre l'air de déshydratation est à une température nettement supérieure à la plage de température où se forme le tétrahydrate.

L'exemple 11, où le traitement comporte une première phase de fixation de l'eau intercristalline, et une seconde phase distincte de neutralisation de l'acidité intercristalline, met en lumière que le traitement n'est efficace que lorsque la neutralisation est effectuée. Et l'exemple 10 montre que l'agent neutralisant peut être introduit en mélange avec le sulfate déshydraté.

Il ressort en outre des exemples que le carbonate de calcium en poudre fine (correspondant à une surface spécifique d'au moins 6 000 cm²/g soit 600 m²/kg pour employer une unité légale, mais peu usitée) est l'agent neutralisant préféré. Ceci a été confirmé par ailleurs par des essais non rapportés ici, qui ont montré notamment que les hydroxydes et oxydes comme la chaux et la magnésie ont une efficacité réduite, liée peut-être à des difficultés d'emploi.

Par ailleurs, on remarquera que le carbonate ferreux constitue un agent neutralisant convenable, à condition d'en utiliser une quantité suffisante. Mais alors le sulfate traité ne comporte pratiquement que des sels ferreux, et essentiellement du sulfate ferreux, la neutralisation conduisant à la formation de sulfate ferreux de sorte que seul le carbonate en excès reste sous cette forme. La neutralisation au carbonate ferreux est intéressante notamment si le sulfate doit être utilisé pour la préparation de pigments.

## Revendications

1. Procédé de traitement de sulfate ferreux cristallisé en forme heptahydratée avec des traces intercristallines d'eau contenant de l'acide libre où, pour supprimer la tendance des cristaux à s'agglomérer et les rendre aptes à s'écouler librement, on élimine les traces d'eau en ajoutant à ce sulfate ferreux, en mélange intime, un sulfate ferreux en défaut d'hydratation d'au plus 40,5% en poids, en quantité au moins suffisante pour compenser l'eau en traces intercristallines, caractérisé en ce que le défaut d'hydratation du sulfate ferreux ajouté étant d'au moins 10% en poids, on neutralise l'acide libre par ajout de 0,5 à 2% en poids d'un agent de neutralisation pulvérulent.

2. Procédé suivant la revendication 1, caractérisé en ce que le sulfate ferreux en défaut d'hydratation est ajouté au sulfate ferreux heptahydraté à traiter, à raison de 6 à 12% en poids par rapport au sulfate à traiter.

3. Procédé suivant l'une des revendications 1 et 2, caractérisé en ce que l'agent neutralisant est choisi dans le groupe comprenant les oxydes et hydroxydes alcalino terreux, les carbonates et bicarbonates alcalins, alcalino terreux et le carbonate ferreux, le magnésium étant assimilé aux métaux alcalino terreux.

4. Procédé suivant l'une quelconque des revendications 1 à 3, caractérisé en ce que le sulfate ferreux en défaut d'hydratation a été calciné à une température au plus égale à 250°C.

5. Procédé suivant la revendication 4, caractérisé en ce quel'on fait tomber des cristaux de sulfate ferreux heptahydraté sur une plaque chauffée à 250°C environ, on récupère le produit calciné, et on le broie.

6. Procédé suivant la revendication 4, caractérisé en ce que l'on chauffe progressivement une couche de sulfate heptahydraté d'épaisseur au plus égale à 1 cm en brassant les cristaux jusqu'à ce que, après fusion de l'heptahydrate, il se forme une masse durcie, que l'on broie après refroidissement.

## Patentansprüche

1. Verfahren zur Behandlung von kristallisiertem Eisen-II-sulfat-heptohydrat mit freie Säure enthaltenden interkristallinen Wasserspuren, bei dem, um die Neigung der Kristalle zum Agglomerieren zu unterdrücken und sie zum freien Abfließen geignet zu machen, die Wasserspuren beseitigt werden, indem dem genannten Eisensulfat in inniger Vermischung ein Eisensulfat mit Hydratationsmangel mit höchstens 40,5 Gewichts-% in einer zur Kompensierung des Wassers in interkristallinen Spuren zumindest ausreichenden Menge beigegeben wird, dadurch gekennzeichnet, daß der Hydratationsmangel des hinzugegebenen Eisensulfats mindestens 10 Gewichts-% ausmacht und demzufolge die freie Säure durch Hinzufügung von 0,5 bis 2 Gewichts-% eines pulverförmigen Neutralisierungswirkstoffes neutralisiert wird.

2. Verfahren nach Anspruch 1, dadurch gekennzeichnet, daß das Eisensulfat mit Hydratationsmangel zu dem zu behandelnden Eisen-II-sulfat-heptohydrat in einer Menge von 6 bis 12 Gewichts-% bezogen auf das zu behandelnde Sulfat hinzugegeben wird.

3. Verfahren nach Anspruch 1 bis 2, dadurch gekennzeichnet, daß der Neutralisierungswirkstoff in der Gruppe gewählt wird, die die alkalisch erdigen Oxide und Hydroxide, die alkalischen und alkalisch erdigen Karbonate und Bikarbonate und Eisenkarbonat umfaßt, wobei Magnesium den alkalisch erdigen Metallen gleichgestellt wird.

4. Verfahren nach Anspruch 1 bis 3, dadurch gekennzeichnet, daß das Eisensulfat mit Hydratationsmangel bei einer Temperatur höchstens gleich 250°C kalziniert wurde.

5. Verfahren nach Anspruch 4, dadurch gekennzeichnet, daß Kristalle von Eisen-II-sulfat-heptohydrat auf eine auf ungefähr 250°C erhitzte Platte fallengelassen werden das, kalziniert Produkt entnommen und zerkleinert wird.

6. Verfahren nach Anspruch 4, dadurch gekennzeichnet, daß eine Schicht Sulfatheptohydrat mit einer Dicke von höchstens einem Zentimeter allmählich erhitzt wird, wobei die Kristalle gerührt werden, bis nach Schmelzen des Heptohydrats eine gehärtete Masse entsteht, die nach Abkühlen zerkleinert wird.

**Claims**

1. A process for treating ferrous sulphate crystallized in the heptahydrate form having trace amounts of intercrystalline water containing free acid in which, in order to suppress the tendency of the crystals to agglomerate and to render them able to flow freely, the traces of water are eliminated by adding, in intimate mixture, to this ferrous sulphate a ferrous sulphate which is underhydrated to 40.5% by weight at most, in an amount at least sufficient to compensate for the trace amounts of intercrystalline water, characterized in that the underhydration of the added ferrous sulphate is at least 10% by weight, and the free acid is neutralized by the addition of 0.5 to 2% by weight of a pulverulent neutralizing agent.

2. A process according to claim 1, characterized in that the underhydrated ferrous sulphate is added to the ferrous sulphate heptahydrate to be treated at a rate of 6 to 12% by weight relative to the sulphate to be treated.

3. A process according to one of claims 1 and 2, characterized in that the neutralizing agent is chosen from the group comprising the alkaline earth oxides and hydroxides, the alkali and alkaline earth carbonates and bicarbonates and ferrous carbonate, magnesium being assimilated in the alkaline earth metals.

4. A process according to any one of claims 1 to 3, characterized in that the underhydrated ferrous sulphate has been calcined at a temperature at most equal to 250°C.

5. A process according to claim 4, characterized in that the ferrous sulphate heptahydrate crystals are dropped on a plate heated to about 250°C, and the calcined product is recovered and crushed.

6. A process according to claim 4, characterized in that a layer of sulphate heptahydrate having a thickness at most equal to 1 cm is progressively heated whilst the crystals are stirred until, after fusion of the heptahydrate, it forms a hardened mass which is crushed after cooling.